Europäisches Patentamt

European Patent Office

Office européen des brevets

(11) Numéro de publication: **0 336 512**
**A2**

## (12) DEMANDE DE BREVET EUROPEEN

(21) Numéro de dépôt: **89200840.0**

(22) Date de dépôt: **03.04.89**

(51) Int. Cl.4: **F01N 3/02**

(30) Priorité: **08.04.88 IT 6731288**

(43) Date de publication de la demande:
**11.10.89 Bulletin 89/41**

(84) Etats contractants désignés:
**BE DE ES FR GB GR NL SE**

(71) Demandeur: **I.R.T.I. ISTITUTO DI RICERCA E TRASFERIMENTI TECNOLOGICI ALLE IMPRESE S.R.L.**
**Via Aurelia 58**
**I-00165 Roma(IT)**

(72) Inventeur: **Carboni, Luigi**
**Via Argentero 2**
**I-10126 Torino(IT)**

(74) Mandataire: **Patrito, Pier Franco, Dr. Ing.**
**Cabinet PATRITO BREVETTI Via Don Minzoni 14**
**I-10121 Torino(IT)**

(54) Epurateur des gaz d'échappement de moteurs à combustion interne, avec un sélectionneur de molécules à vortex.

(57) Un épurateur pour les gaz échappement de moteurs à combustion interne, qui comprend un circuit (2,3,9,10) pour les gaz, fermé sur lui-même, ayant une entrée (1) pour les gaz à épurer, et comprenant un sélectionneur de molécules à vortex (5,6,13) avec une surface spiraloïde (13), pourvu d'une ouverture de sortie (7) connectée à un tuyau (8) d'échappement vers l'ambient extérieur, tandis qu'une chambre intérieure (9) communiquant avec la chambre à vortex contient des moyens (27,22) d'épuration des gaz et a une sortie (10) qui, de préférence avec l'interposition d'une roue de turbine folle (19) destinée à prévenir des phénomènes de reflux, est raccordée avec la région (2) du circuit dans laquelle est située l'entrée (1) pour les gaz. Dans la chambre intérieure (9) communiquant avec la chambre à vortex et faisant partie du circuit pour les gaz est monté un corps hélicoïdal (27) fait d'un matériau ayant effet catalytique, tandis qu'à la périphérie de cette chambre intérieure (9) est prévu un passage (22) de communication vers un espace (23) de réception pour les résidus solides et liquides séparés des gaz, residus qui peuvent être déchargés de temps en temps à travers un bouchon inférieur (24).

FIG. 2

Xerox Copy Centre

# EPURATEUR DES GAZ D'ECHAPPEMENT DE MOTEURS A COMBUSTION INTERNE, AVEC UN SELECTIONNEUR DE MOLECULES A VORTEX

La présente invention a pour objet un épurateur des gaz d'échappement de moteurs à combustion interne.

Les épurateurs connus pour le but indiqué agissent habituellement par des actions de filtration, d'oxidation, de réaction catalytique et similaires, pour séparer physiquement et chimiquement des gaz d'échappement, qui sont destinés à être introduits dans l'atmosphère, les résidus solides et les substances nuisibles qu'ils contiennent. Toutefois l'efficacité de ces épurateurs est limitée spécialement par le fait que les substances nuisibles sont contenues dans les gaz d'échappement en des pourcentages qui, tout en étant considérables du point de vue de la pollution, sont très réduits en absolu, de sorte que toute opération les afférant est entravée par l'état de grande diluition dans lequel se trouvent ces substances. Un autre empêchement aux opérations d'épuration vient de la température relativement peu haute montrée par les gaz d'échappement; les effets catalytiques ainsi que les réactions chimiques d'oxidation et autres sont favorisés par des températures plus élevées de celles montrées par les gaz d'échappement des moteurs à combustion interne. Pour cette raison, dans certains appareils d'épuration on introduit des sources de chaleur, ce qui d'autre part complique la construction et porte à une consommation d'énergie qui doit être fournie de l'extérieur. Enfin, maints épurateurs connus opposent au flux des gaz d'échappement une résistance relativement haute, laquelle donne lieu à une réduction du rendement du moteur à combustion interne, ou bien doit être surmontée en employant des moyens ventilateurs. Ces derniers, d'autre part, compliquent la construction et peuvent donner lieu à une consommation d'énergie fournie de l'extérieur.

En considération de ces problèmes, le but de la présente invention est de réaliser un appareil épurateur qui doit atteindre une efficacité clairement supérieure que celle des épurateurs connus, particulièrement en faisant recours à des moyens capables d'augmenter la température et la concentration locale des substances nuisibles dans les régions où sur ces substances on applique des actions tendant à les modifier, et cela sans introduire des empêchements appréciables au flux des gaz et sans demander une construction excessivement compliquée ni aucune introduction d'énergie de l'extérieur. Le principe sur lequel l'invention repose est d'exploiter dans ce but les propriétés singulières d'un sélectionneur de molécules à vortex.

Le sélectionneur de molécules à vortex, plus généralement connu sous le nom de "tube chaudfroid", est basé sur des principes scientifiques déjà exposés en partie par Maxwell et autres hommes de science; il a trouvé réalisation, bien que seulement expérimentale, grâce à Hilsch et autres, et il est devenu approprié pour des applications industrielles grâce aux perfectionnements introduits par l'auteur de la présente invention, décrits dans le Brevet italien No. 975.810. Ce dispositif est constitué substantiellement par une chambre à vortex ayant un raccord d'entrée tangentiel, contenant une surface spiraloïde qui se commence à peu près tangentielle audit raccord d'entrée et s'étend en direction centripète en se terminant en un point plus proche de l'axe de la chambre que ledit raccord d'entrée, et pourvue d'un côté d'une ouverture de sortie centrale de diamètre réduit et du côté opposé d'une ouverture de grand diamètre communiquant avec une chambre intérieure qui présente une légère contrepression. Si un flux de gaz est envoyé sous une pression appropriée audit raccord d'entrée de la chambre à vortex, par suite de son entrée tangentielle dans la chambre, ainsi qu'en consequence de la présence de la surface spiraloïde, ce flux forme un vortex intense, et l'on remarque qu'à travers l'ouverture de sortie centrale de diamètre réduit est débité un flux de gaz assez refroidi et fortement épuré, tandis qu'un flux de gaz assez rechauffé et contenant presque la totalité des impuretés est acheminé à travers l'ouverture de grand diamètre vers la chambre intérieure communiquant. Ce phénomène est dû à l'effet du fort champ de forces centrifuges qui se produit dans le vortex, ainsi qu'aux effets thermodynamiques, d'autre part pas encore entièrement éclaircis, qui en résultent. En vue de son comportement, ce dispositif a eu quelques applications, limitées en pratique au conditionnement de l'air.

En considération de ce qui précède, le but de cette invention est atteint moyennant un épurateur pour les gaz d'échappement de moteurs à combustion interne, caractérisé en ce qu'il comprend un circuit pour le gaz, fermé sur lui-même, ayant une entrée pour les gaz d'échappement à épurer, et comprenant un selectionneur de molécules à vortex, dont l'ouverture de sortie est connectée à un tuyau d'échappement vers l'ambient extérieur, tandis que la chambre intérieure communiquant avec la chambre à vortex contient des moyens d'épuration des gaz et a une sortie connectée avec la région du circuit où est située ladite entrée.

Grâce à cette disposition, les gaz acheminés à l'épurateur entrent dans la chambre à vortex, une partie d'entre eux, bien épurée par sélection des molécules et assez refroidie, est déchargée vers l'ambient extérieur, tandis que le reste des gaz, comportant encore les impuretés et assez rechauffée, est acheminée vers la chambre intérieure, communiquant avec la chambre à vortex, dans laquelle se trouvent des moyens d'épuration. Ces derniers agissent en des conditions plus favorables de celles habituelles, d'un côté dû à l'augmentation de température supportée par les gaz, et d'autre côté dû à la plus grande concentration des impuretés dans les gaz. Enfin les gaz ainsi épurés reviennent à la région d'entrée du circuit et, en se mélangeant avec des nouveaux gaz introduits, sont acheminés à nouveau vers la chambre à vortex.

De cette façon les gaz impures parcourent plusieurs fois le circuit, chaque fois revenant à son entrée, et chaque fois recevant l'action des moyens d'épuration, jusqu'à ce qu'ils ont atteint un dégré d'épuration suffisant pour pouvoir être déchargés dans l'ambient extérieur à travers l'ouverture centrale de sortie de la chambre à vortex. Bien entendu, dans le fonctionnement de régime les gaz déchargés à l'extérieur ont la même température des gaz venant du moteur, sauf pour les échanges de chaleur entre l'appareil épurateur et l'ambient extérieur, mais les gaz qui parcourent le circuit de l'épurateur, au contraire, ont une température considérablement supérieure, laquelle, comme on l'a déjà dit, est favorable pour l'action des moyens d'épuration. De plus, les gaz qui passent de la chambre à vortex vers la chambre intérieure communiquant ont un mouvement intense de rotation, qui peut être exploité pour obtenir une séparation centrifuge efficace des résidus solides et liquides charriés par les gaz d'échappement, sans avoir recours à des opérations de filtration qui comporteraient des fortes résistances au flux.

De préférence, dans ladite chambre intérieure communiquant avec la chambre à vortex et faisant partie du circuit pour les gaz est monté un corps hélicoïdal fait d'un matériau ayant un effet catalytique, tandis qu'à la périphérie de ladite chambre intérieure est prévu un passage de communication vers un espace de réception pour les résidus solides et liquides séparés des gaz.

De cette façon, le corps hélicoïdal est léché par le flux des gaz et il exerce sur lui son efficace action catalytique, tandis que les impuretés solides et liquides, relativement lourdes, sont déplacées vers la périphérie de la chambre intérieure et déchargées dans l'espace de réception prévu à cet effet.

De préférence une roue à turbine, folle, est montée entre l'extrémité de ladite chambre intérieure communiquant avec la chambre à vortex, opposée à la chambre à vortex elle-même, et la région du circuit à laquelle aboutit l'entrée pour les gaz à épurer.

En vertu de cette disposition on peut éviter de façon efficace toute possibilité de reflux des gaz entrant vers la chambre intérieure communiquant avec la chambre à vortex, et on assure un développement ordonné des fluxes de gaz.

Ces caractéristiques et autres, et les avantages de l'objet de l'invention, ressortiront plus clairement de la suivante description d'un mode de réalisation, donné à titre d'exemple non limitatif et représenté dans les dessins annexés, dans lesquels:

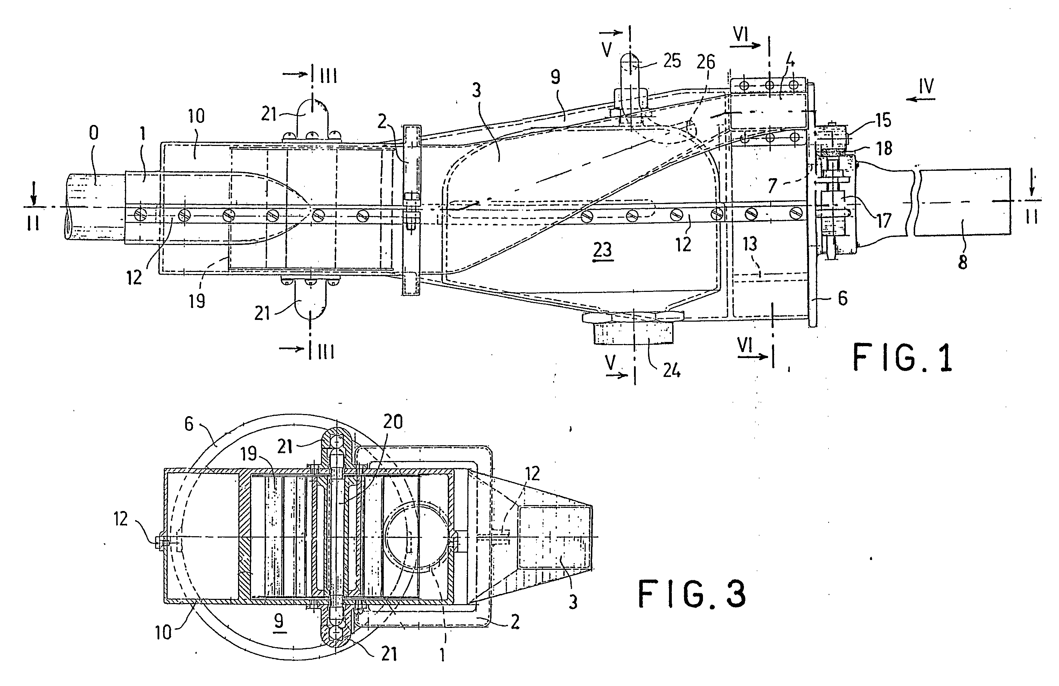

Fig. 1 est une vue en élévation de côté de l'appareil épurateur, en échelle réduite;

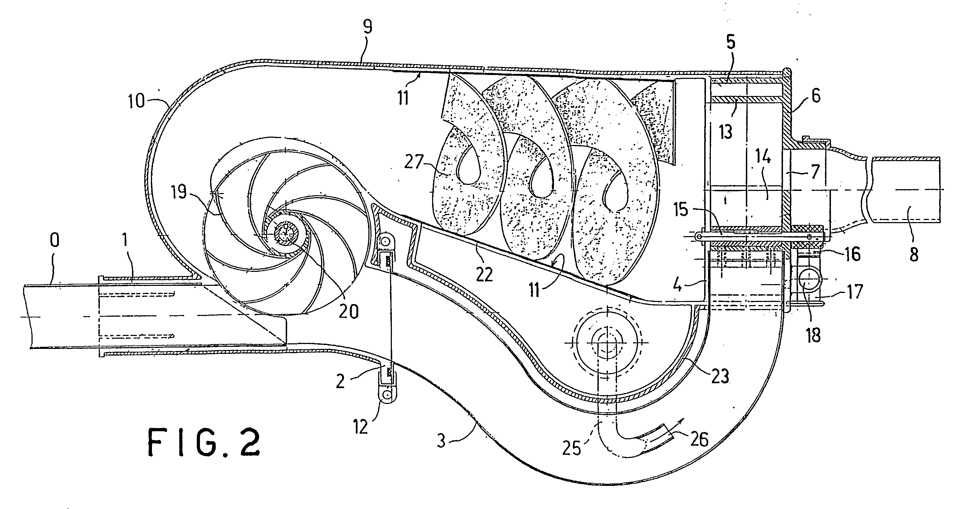

Fig. 2 en montre une section à peu près horizontale, faite substantiellement suivant la ligne brisée II-II de la figure 1;

Fig. 3 en montre une section transversale faite suivant la ligne III-III de la figure 1;

Fig. 4 en montre une vue d'en bout suivant la flèche IV de la figure 1;

Fig. 5 en montre une section transversale faite suivant la ligne V-V de la figure 1; et

Fig. 6 en montre une section transversale faite suivant la ligne VI-VI de la figure 1.

Le numéro 1 indique un raccord d'entrée à l'épurateur, auquel est destiné à être connecté un tuyau 0 d'echappement d'un moteur à combustion interne. Le numéro 2 indique un raccord pour un tuyau de distribution 3 faisant partie du circuit pour les gaz. Le raccord 1 peut avantageusement avoir une section circulaire, tandis que le raccord 2 et le tuyau de distribution 3 ont de préférence une section rectangulaire. Ledit tuyau de distribution 3, courbé et fuselé, est dirigé vers un raccord d'entrée 4 d'une chambre à vortex définie par une paroi périphérique 5 et par une paroi transversale 6, dans laquelle est creusée une ouverture centrale de sortie 7 connectée à un tuyau d'échappement 8 ouvert vers l'ambient extérieur. Du côté opposé à la paroi transversale 6, la chambre à vortex communique largement avec une chambre intérieure définie par une paroi substantiellement tronconique 9 qui se termine par une partie de section rectangulaire 10 confluant, avec le raccord d'entrée 1, dans ledit raccord 2 du tuyau de distribution 3. Une partie de la surface interne de la paroi 9 est pourvue d'une couche 11 ayant un effet catalytique, de préférence nickel. Du point de vue de la construction, les parties 1, 2, 9, 10, et autres décrites dans la suite, font partie, de préférence, de deux coques, une coque inférieure et une coque supérieure, connectées de façon étanche dans une région moyenne 12. Les deux coques peuvent être fabriquées de préférence en acier inoxydable, par exemple fritté. Le tuyau de distribution 3 peut, par exemple, être de tôle d'acier inoxydable.

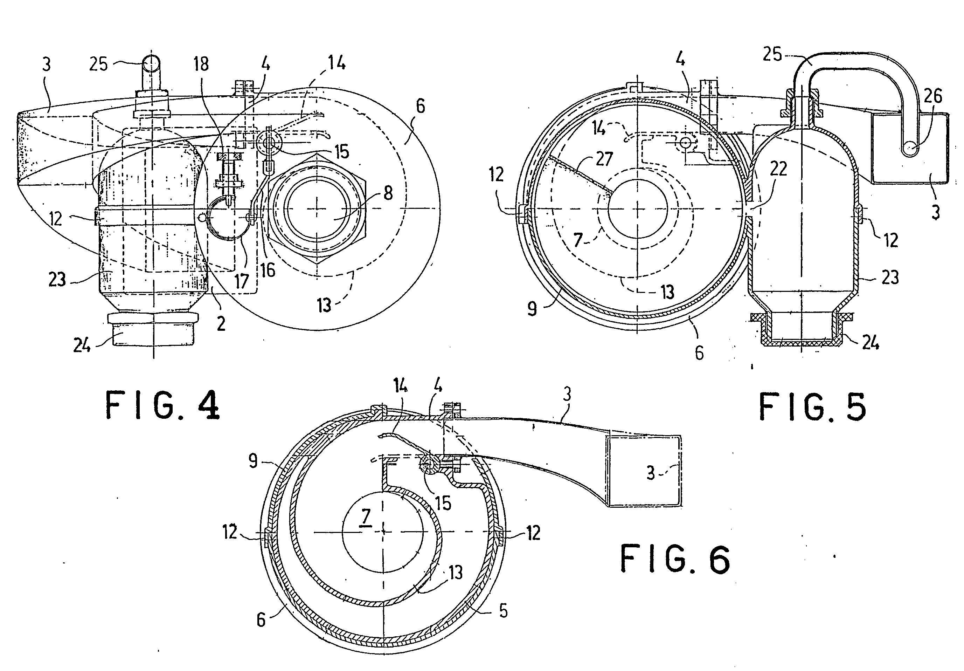

Dans la partie d'extrémité, opposée à la région 10, de la paroi tronconique 9 est inséré un corps constituant la chambre à vortex, corps qui comprend ladite paroi périphérique 5 et la paroi transversale 6, ainsi qu'une paroi 13 constituant une surface spiraloïde qui, prenant commencement au raccord d'entrée 4, est dirigée de façon centripète et se termine sur un rayon substantiellement correspondant au rayon de l' ouverture de sortie 7, comme le montre la figure 6. Ce corps peut être réalisé, par exemple, par une fusion travaillée de laiton, recouverte de préférence par du nickel ou autre métal approprié, au moins dans la partie 13 constituant la surface spiraloïde. Cette surface a, de préférence, un développement exponentiel.

Dans le raccord d'entrée 4 de la chambre à vortex est disposée une soupape de réglage constituée par un volet 14 pivoté sur un axe 15. L'axe 15 traverse la paroi transversale 6 et, à l'extérieur de cette paroi, porte un levier 16 sollicité par un ressort 17. La tension du ressort 15 peut, éventuellement, être réglable moyennant une vis 18. Le ressort 17 pousse élastiquement la soupape à volet 14 vers une position, montrée par une ligne continue dans la figure 6, dans laquelle cette soupape étrangle partiellement le passage dans le raccord 4, tout en permettant un déplacement élastique de la soupape vers une position, indiquée dans la même figure par des lignes interrompues, dans laquelle la section de passage laissée libre est plus étendue.

Dans la partie extrême 10 de la chambre intérieure définie par les parois 9, 10 est montée folle une roue à turbine 19, pivotée sur un axe 20 qui, de préférence, a des extrémités céramiques rapportées, et est tourillonné en des supports à bille 21.

La paroi tronconique 9 a une fente longitudinale 22 communiquant avec un espace de réception défini par une paroi 23, pourvue dans la partie inférieure d'un bouchon 24 de décharge. De la partie supérieure de l'espace de réception interne à la paroi 23 prend commencement un tuyau 25, qui traverse la paroi du tuyau de distribution 3 et se termine à l'intérieur de ce tuyau par une extrémité 26 formant un éjecteur.

Dans la chambre intérieure 9 est monté un corps hélicoïdal 27 en un matériau ayant effet catalytique, par exemple un fritté granulaire de cuivre, ou bien un filet revêtu de tantale, d'iridium ou d'indium.

Le fonctionnement du dispositif décrit est le suivant. Les gaz d'échappement venant du tuyau d'échappement 0 d'un moteur à combustion interne arrivent au raccord d'entrée 1, au raccord 2 et au tuyau de distribution 3, qui les achemine vers le raccord d'entrée 4 de la chambre à vortex. En pénétrant dans la chambre à vortex, les gaz rencontrent la soupape à volet 14, laquelle dirige le flux en une direction tangentielle à la surface spiraloïde 13; la soupape 14 se déplace élastiquement et automatiquement sous la poussée des gaz entrant, en variant la section de passage disponible en fonction du débit du flux de gaz dirigé vers la surface spiraloïde. Dans ces conditions, le flux de gaz produit, dans l'intérieur de la surface spiraloïde, un vortex intense; une partie du flux entrant est débitée à travers l'ouverture de sortie 7 et déchargée dans l'ambient extérieur, tandis que le reste du flux entrant se transfère dans la chambre intérieure définie par la paroi tronconique 9. La disposition décrite constitue un sélectionneur de molécules à vortex et, en considération des péculiarités de ce dispositif et de ses propres effets d'inertie et thermodynamiques, la partie du flux qui est acheminée vers l'extérieur est assez refroidie et efficacement épurée, tandis que la partie du flux qui est acheminée vers la chambre intérieure est assez rechauffée et contient presque la totalité des impuretés originalement contenues dans le flux de gaz entrant; ces impuretés présentent donc une concentration considérablement augmentée par rapport à celle originale.

Le flux ainsi acheminé à la chambre tronconique 9, puisqu'il vient d'un vortex, est animé par un mouvement rotatif intense, qui déplace vers l'extérieur les particules solides et liquides charriées par le flux, jusque contre la paroi 9, de sorte qu'en rencontrant la fente 22 ces particules s'échappent vers l'espace défini par la paroi 23 et s'y rassemblent. Un léger courant de gaz s'établit à travers la fente 22 dû à l'aspiration exercée par le tuyau 25 qui se termine comme un éjecteur dans le tuyau de distribution 3 parcouru par les gaz, et ce courant favorise ladite séparation des particules solides et liquides, et prévient la formation d'une contrepression dans l'espace de réception 23. Les matériaux qui s'accumulent dans l'espace 23 peuvent être déchargés, de temps en temps, à travers le bouchon 24.

En outre, dans la chambre 9 le flux lèche le corps hélicoïdal 27 et en vertu de la conformation du corps 27, laquelle correspond substantiellement à la forme des lignes de flux du gaz, ce dernier ne souffre aucune résistance appréciable à son avancement. Le corps hélicoïdal 27 exerce son action catalytique sur les gaz, et cet effet catalytique est particulièrement efficace parce qu'il s'applique sur des gaz dans lesquels la température et la concentration des matières à modifier sont considérablement augmentées par rapport à celles originales. En considération de la température relativement élevée, devient considérable aussi l'effet catalytique dans le lèchement des parois 9 et 10 d'acier inoxydable, et particulièrement des parties de parois qui sont pourvues de la couche 11 de nickel.

Les gaz ainsi traités arrivent à la chambre 10, ils traversent la roue à turbine 19 en la faisant tourner, et pénètrent dans le raccord 2 pour être recyclés. La présence de la roue à turbine 19 assure que les gaz entrant par l'entrée 1 ne peuvent pas refluer vers la chambre 10 au lieu de pénétrer dans le raccord 2. Dans le raccord 2, les gaz venant de l'entrée 1 et ceux recyclés venant de la chambre 10 se mélangent, et ils sont acheminés ensemble par le tuyau de distribution 3 vers l'entrée 4 de la chambre à vortex.

Les gaz pollués sont donc recyclés continuellement, en passant et repassant à travers la chambre à vortex et la chambre intérieure de traitement 9, jusqu'à ce qu'ils ont atteint un degré d'épuration suffisant et ils sont déchargés à travers l'ouverture de sortie 7 de la chambre à vortex. Par conséquent on obtient un effet d'épuration bien plus intense de l'effet qu'on pourrait de toute façon réaliser par un passage des gaz seulement, comme il s'avère dans les appareils épurateurs connus.

Bien entendu, des différentes modifications peuvent être portées aux parties décrites. Par exemple, la soupape d'entrée 14 de la chambre à vortex peut être conformée de façon différente, ou bien elle peut être omise dans les applications où les gaz entrant ont un débit substantiellement constant. La fente 22 peut être remplacée par un tronçon de parois perforée ou en filet. La roue à turbine 19 peut être conformée de façon différente, ou bien elle peut être remplacée par un dispositif à soupape ou, spécialement dans les applications à débit substantiellement constant, par un dispositif à éjecteur. Les dimensions et les proportions des parties doivent être commisurées aux débits de gaz à épurer que l'on prévoit. Les parois du dispositif, et spécialement la paroi 9, peuvent éventuellement être isolées dans le but d'augmenter la température des gaz en cours de traitement.

**Revendications**

1 . Epurateur pour les gaz d'échappement de moteurs à combustion interne, caractérisé en ce qu'il comprend un circuit (2,3,9,10) pour les gaz, fermé sur soi-même, ayant une entrée (1) pour les gaz d'échappement à épurer, et comprenant un sélectionneur de molécules à vortex (5,6,13), dont l'ouverture de sortie (7) est connectée à un tuyau (8) d'échappement vers l'ambient extérieur, tandis que la chambre intérieure (9) communiquant avec la chambre à vortex (5,6, 13) contient des moyens (27,22) d'épuration des gaz et est pourvue d'une sortie (10) connectée à la région (2) du circuit où se trouve ladite entrée (1).

2 . Epurateur pour gaz d'échappement suivant la revendication 1, caractérisé en ce que dans ladite chambre intérieure (9) communiquant avec la chambre à vortex (5,6,13) et faisant partie du circuit (2,3,9,10) pour les gaz est monté un corps hélicoïdal (27) fait d'un matériau ayant un effet catalytique.

3 . Epurateur pour gaz d'échappement suivant la revendication 1, caractérisé en ce qu'à la périphérie de ladite chambre intérieure (9) communiquant avec la chambre à vortex (5,6,13) et faisant partie du circuit (2,3,9,10) pour les gaz il est prévu un passage (22) de communication vers un espace (23) de réception pour les résidus solides et liquides séparés des gaz.

4 . Epurateur pour gaz d'échappement suivant la revendication 3, caractérisé en ce que ledit espace (23) de réception pour les résidus solides et liquides séparés des gaz est pourvu d'un bouchon inférieur (24) pour la décharge périodique des matériaux rassemblés.

5 . Epurateur pour gaz d'échappement suivant la revendication 3, caractérisé en ce que ledit espace (23) de réception est mis en communication, par un tuyau (25), avec une partie (3) du circuit (2,3,9,10) pour les gaz qui est disposée en amont par rapport au sélectionneur de molécules à vortex (5,6,13).

6 . Epurateur pour gaz d'échappement suivant la revendication 5, caractérisé en ce que ledit tuyau (25) est conformé comme éjecteur (26) pour produire une légère dépression dans ledit espace (23) de réception.

7 . Epurateur pour gaz d'échappement suivant la revendication 1, caractérisé en ce qu'à l'entrée (4) dudit sélectionneur de molécules à vortex est montée une soupape de réglage (14-18) disposée pour maintenir substantiellement constante la vitesse des gaz, indépendamment de leur débit.

8 . Epurateur pour gaz d'échappement suivant la revendication 7, caractérisé en ce que ladite soupape de réglage (14-18) comprend un volet (14) poussé par un ressort (17), éventuellement réglable (18), vers une position dans laquelle il étrangle la section de passage à l'entrée (4) du sélectionneur de molécules, tandis que la pression des gaz entrant déplace ledit volet vers des positions auxquelles correspondent des sections de passage plus étendues.

9 . Epurateur pour gaz d'échappement suivant la revendication 1, caractérisé en ce que ledit sélectionneur de molécules à vortex est constitué par une chambre à vortex comprenant un raccord d'entrée (4), une paroi périphérique (5), una paroi transversale (6) ayant une ouverture de sortie (7), et une paroi (13) conformée en spyraloïd, de préférence exponentiel.

10 . Epurateur pour gaz d'échappement suivant la revendication 9, caractérisé en ce que lesdites parties (5,6,13) de la chambre à vortex sont formées par une seule pièce insérée dans une extrémité de ladite chambre intérieure (9) contenant les moyens (27,22) d'épuration des gaz.

11 . Epurateur pour gaz d'échappement suivant la revendication 1, caractérisé en ce qu'une roue à turbine folle (19) est montée entre l'extrémité (10) de ladite chambre intérieure (9) communiquant avec la chambre à vortex, et la région (2) du circuit pour les gaz, dans laquelle aboutit l'entrée (1) pour les gaz à épurer.

12 . Epurateur pour gaz d'échappement suivant la revendication 1, caractérisé en ce qu'au moins une partie (11) des parois du dispositif est constituée ou revêtue par un matériau ayant un effet catalytique.

13 . Epurateur pour gaz d'échappement suivant les revendications précédentes, caractérisé en ce que la plupart du dispositif est formée par deux coques, une coque superieure et une coque inférieure, jointes de façon étanche dans une région moyenne (12).

FIG.1

FIG.3

FIG.2

EP 0 336 512 A2

FIG. 4

FIG. 5

FIG. 6

EP 0 336 512 A2